# EUROPÄISCHE PATENTSCHRIFT

(11) **EP 1 249 404 B1**
(45) Veröffentlichungstag und Bekanntmachung des Hinweises auf die Patenterteilung: **23.06.2004**
(21) Anmeldenummer: 02006832.6
(22) Anmeldetag: 25.03.2002
(51) Int. Cl.: B65G 9/00, B65G 17/20

(54) **Verstärkter Fördergutträger einer Hängefördereinrichtung**
Reinforced loadcarrier of an overhead conveyor
Porte-charges renforcé d'un convoyeur aérien

(30) Priorität: 12.04.2001 DE 20106453 U
(43) Veröffentlichungstag der Anmeldung: 16.10.2002
(73) Patentinhaber: WF Logistik GmbH, 86899 Landsberg (DE)
(72) Erfinder: Philippin, Holger, 86179 Augsburg (DE)
(74) Vertreter: Tiesmeyer, Johannes, Dr.

(56) Entgegenhaltungen:
- EP-A- 0 516 969
- EP-A- 1 059 247

## Beschreibung

Die Erfindung betrifft ein Rollenlaufwerk für einen längs einer Laufschiene hängend bewegbaren Fördergutträger einer Hängefördereinrichtung, umfassend ein Laufwerksgehäuse, eine mit der Laufschiene in Rolleingriff bringbare Laufrollenanordnung mit mindestens einer an einer ersten Stützflächenanordnung innerhalb des Laufwerksgehäuses abgestützten Laufrolle-Achswelle-Einheit sowie eine der Gelenkverbindung des Rollenlaufwerks mit einem Tragelement für zu transportierendes Fördergut, insbesondere einer an zwei Rollenlaufwerken gehaltenen Tragstange dienende Gelenkanordnung mit einem an einer zweiten Stützflächenanordnung innerhalb des Laufwerksgehäuses gelenkig abgestützten Gelenkkörper.

Ein Rollenlaufwerk der vorstehend angegebenen Art ist beispielsweise aus der EP 1 059 247 A1 und der EP 0 516 969 A1 bekannt. In diesen Druckschriften wird das Rollenlaufwerk für einen Fördergutträger verwendet, welcher aus zwei derartigen, an einer Schiene hängend bewegbaren Rollenlaufwerken und einer die Rollenlaufwerke verbindenden Tragstange aufgebaut ist. Der Fördergutträger dient beispielsweise dem Transport von Kleidungsstücken an Kleiderbügeln, die an der Tragstange des Fördergutträgers einzuhängen sind.

Das Arbeitsumfeld, in dem sich solche Fördergutträger bewegen, ist oftmals sehr rau. Die Kleiderbügel mit den daran aufgehängten Kleidungsstücken werden oft mit wenig Sorgfalt an der Tragstange eingehängt und von dieser abgenommen. Stöße und Schläge gegen die Tragstange sind dabei nicht unüblich. Zudem ist es geläufig, an einem Fördergutträger eine Vielzahl von Kleidungsstücken zu transportieren, so dass auf der Tragstange des Fördergutträgers ein entsprechend großes Gewicht lasten kann.

Bei Kurvenfahrten und ansteigenden oder abfallenden Schrägfahrten sowie bei Beschleunigung oder Abbremsung des Fördergutträgers können die Kleidungsstücke darüber hinaus erheblich an der Tragstange zerren. Die Rollenlaufwerke müssen allen diesen auf die Tragstange einwirkenden Belastungen standhalten können.

Die Rollenlaufwerke gemäß EP 1 059 247 A1 und EP 0 516 969 A1 weisen ein in Form eines V-Bügels gestaltetes Laufwerksgehäuse auf, an dessen V-Spitze ein der Verbindung des Rollenlaufwerks mit der Tragstange dienender Gelenkstift gelenkig in dem Gehäuse gelagert ist. An den freien Schenkelenden des Laufwerksgehäuses ist je eine Laufrolle angeordnet, die auf einer innerhalb des Gehäuses gehaltenen Achswelle drehbar gelagert ist. Bei den bisher in der Praxis realisierten Ausführungsformen ist das Laufwerksgehäuse stets aus Kunststoff gefertigt, wobei sowohl der Gelenkstift als auch die Achswellen unmittelbar an dem Kunststoffmaterial des Gehäuses abgestützt sind. Dabei haben sich die Stützbereiche, in denen sich der Gelenkstift und die Achswellen am Gehäuse abstützen, als Schwachstellen herausgestellt: Unter den großen Belastungen, die im Betrieb auftreten können, ist in diesen Stützbereichen gelegentlich das Gehäuse gebrochen und der Gelenkstift und die Achswellen herausgerissen worden. Eine bloße Materialverdickung des Gehäuses in den Stützbereichen kann zwar die Bruchfestigkeit des Gehäuses etwas stärken. Eine vollständig zufriedenstellende Lösung wurde so jedoch nicht erreicht.

Aufgabe der Erfindung ist es daher, ein Rollenlaufwerk der eingangs bezeichneten Art so weiterzubilden, dass es auch größeren Belastungen standhält.

Erfindungsgemäß wird diese Aufgabe dadurch gelöst, dass in dem Laufwerksgehäuse eine vom Material des Laufwerksgehäuses gesonderte Armierungsstruktur untergebracht ist, welche mit der ersten und der zweiten Stützflächenanordnung ausgeführt ist und durchgehend zusammenhängend zwischen den beiden Stützflächenanordnungen verläuft.

Bei der erfindungsgemäßen Lösung können sämtliche tragenden Komponenten des Rollenlaufwerks an der Armierungsstruktur abgestützt werden. Die Durchgängigkeit der Armierungsstruktur hat dabei zur Folge, dass Zugkräfte, die über das Tragelement auf den Gelenkkörper einwirken, im Wesentlichen vollständig über die Armierungsstruktur auf die Laufrolle-Achswelle-Einheit(en) und von dort auf die Schiene übertragen werden - dies unter Umgehung des Materials des Laufwerksgehäuses, das somit im Wesentlichen belastungsfrei bleiben kann. Das Rollenlaufwerk kann daher mit einem vergleichsweise dünnwandigen und dementsprechend leichtgewichtigen Gehäuse hergestellt werden.

Als geeignet widerstandsfähiges Material für die Armierungsstruktur empfiehlt sich ein metallischer Werkstoff, insbesondere Stahl. Das Laufwerksgehäuse kann dann kostengünstig aus einem Kunststoffmaterial hergestellt werden.

Es ist grundsätzlich denkbar, die Armierungsstruktur bei der Formung des Laufwerksgehäuses in dieses einzubetten. Beispielsweise kann das Laufwerksgehäuse um die Armierungsstruktur herum spritzgegossen werden. Bei einer bevorzugten Ausführungsform der Erfindung wird das Laufwerksgehäuse jedoch gesondert von der Armierungsstruktur hergestellt und letztere in das Laufwerksgehäuse eingelegt. Zu diesem Zweck wird das Laufwerksgehäuse aus mehreren (mindestens zwei) Gehäuseteilen gebildet, welche nach Einlegen der Armierungsstruktur zusammenfügbar sind.

Zweckmäßigerweise wird die in das Laufwerksgehäuse eingelegte Armierungsstruktur darin durch Positioniermittel lagefixiert sein. Dabei können die Positioniermittel beispielsweise eine Zapfen-Loch-Anordnung umfassen.

In Weiterbildung der Erfindung umfasst die Armierungsstruktur bevorzugt mindestens eine Armierungsplatte, an welcher jeweils wenigstens ein Teil der beiden Stützflächenanordnungen ausgebildet ist. Diese Armierungsplatte, die vorteilhafterweise einstückig hergestellt ist, lässt sich preiswert und mit geringem Fertigungsaufwand aus Blechmaterial herstellen.

Wie an sich bereits aus EP 1 059 247 A1 und EP 0 516 969 A1 bekannt, ist das Laufwerksgehäuse auch bei dem erfindungsgemäßen Rollenlaufwerk vorzugsweise annähernd V-förmig ausgeführt, wobei die Gelenkanordnung im Bereich der V-Spitze des Laufwerksgehäuses angeordnet ist und im Bereich des freien Endes jedes V-Schenkels des Laufwerksgehäuses eine Laufrolle-Achswelle-Einheit angeordnet ist. Eine bevorzugte Ausführungsform des Rollenlaufwerks sieht dann vor, dass das Laufwerksgehäuse zwei übereinanderliegend zusammengefügte, jeweils annähernd V-förmige Gehäusehälften aufweist, dass die Armierungsstruktur zwei in je eine der Gehäusehälften eingelegte, ebenfalls annähernd V-förmige Armierungsplatten umfasst und dass jede der Armierungsplatten je einen Teil der zweiten Stützflächenanordnung sowie die je einer der Laufrolle-Achswelle-Einheiten zugeordneten Stützflächen der ersten Stützflächenanordnung trägt.

Ein Ausführungsbeispiel der Erfindung wird nachfolgend anhand der beigefügten Zeichnungen näher erläutert. Es stellen dar:
- Fig. 1: eine schematische Perspektivansicht eines an einer Schiene hängenden Fördergutträgers mit erfindungsgemäßen Rollenlaufwerken,
- Fig. 2: eine Vorderansicht eines der Rollenlaufwerke des Fördergutträgers in Blickrichtung II der Fig. 1,
- Fig. 3: eine Perspektivdarstellung einer Gehäusehälfte eines Laufwerksgehäuses des Rollenlaufwerks,
- Fig. 4: eine Perspektivdarstellung einer in das Laufwerksgehäuse eingelegten Armierungsplatte,
- Fig. 5: schematisch einen Schnitt längs der Linie V-V der Fig. 2 und
- Fig. 6: schematisch einen Schnitt längs der Linie VI-VI der Fig. 2.

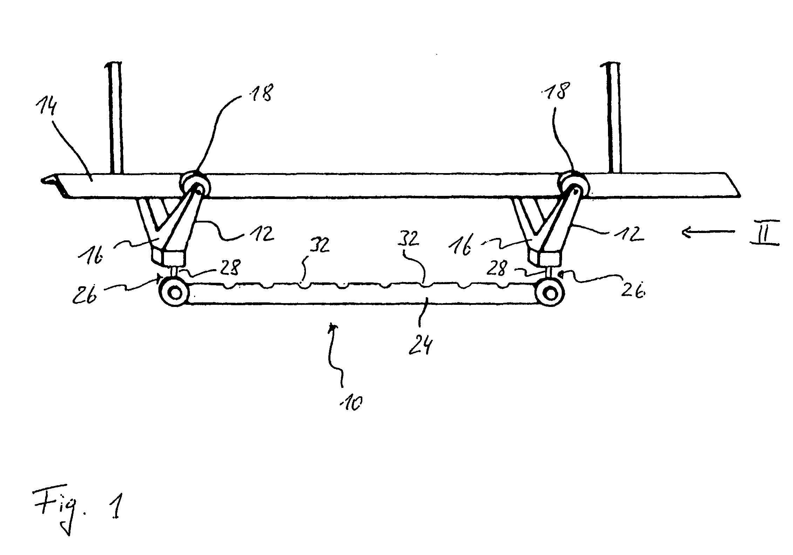

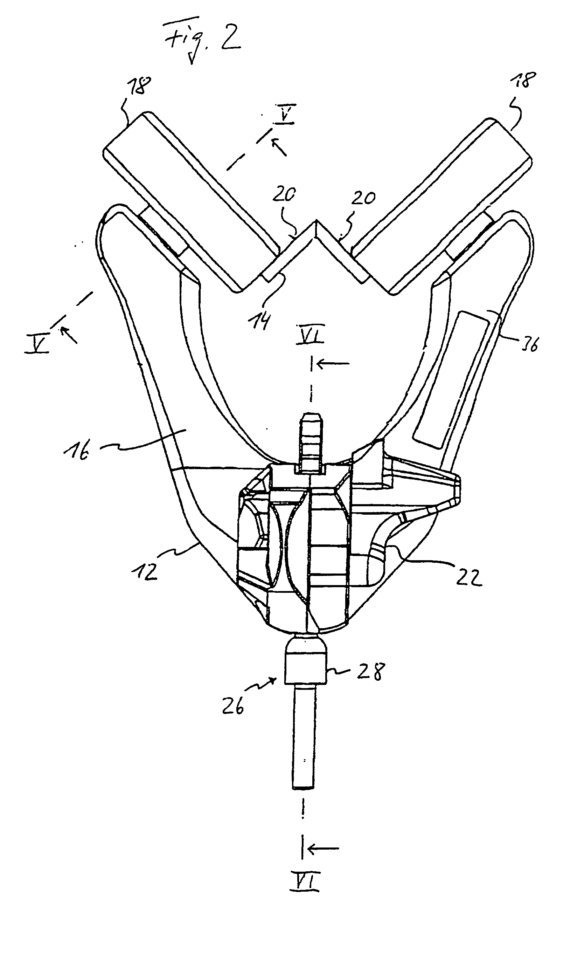

Es wird zunächst auf die Figuren 1 und 2 verwiesen. Der allgemein mit 10 bezeichnete Fördergutträger weist zwei Rollenlaufwerke 12 auf, die in der in den Figuren 1 und 2 gezeigten Förderposition des Fördergutträgers 10 an einer im Querschnitt satteldachförmigen Laufschiene 14 hängend bewegbar sind. Jedes Laufwerk 12 weist einen annähernd V-förmigen Bügel 16 auf, der an seinen beiden abstehenden freien Enden jeweils eine Laufrolle 18 trägt. Wie insbesondere aus Fig. 2 zu ersehen ist, sind die Laufrollen 18 so orientiert, dass sie auf den mit 20 bezeichneten äußeren Schrägflächen der Laufschiene 14 abrollen, wobei der Scheitel, d.h. die V-Spitze, des Bügels 16 unterhalb der Laufschiene 14 hängt.

Jedes der beiden Rollenlaufwerke 12 weist am Bügel 16 einen in Fig. 2 erkennbaren Kupplungsmechanismus 22 auf, welcher das Aneinanderkoppeln mehrerer Fördergutträger 10 zu einem Förderzug erlaubt.

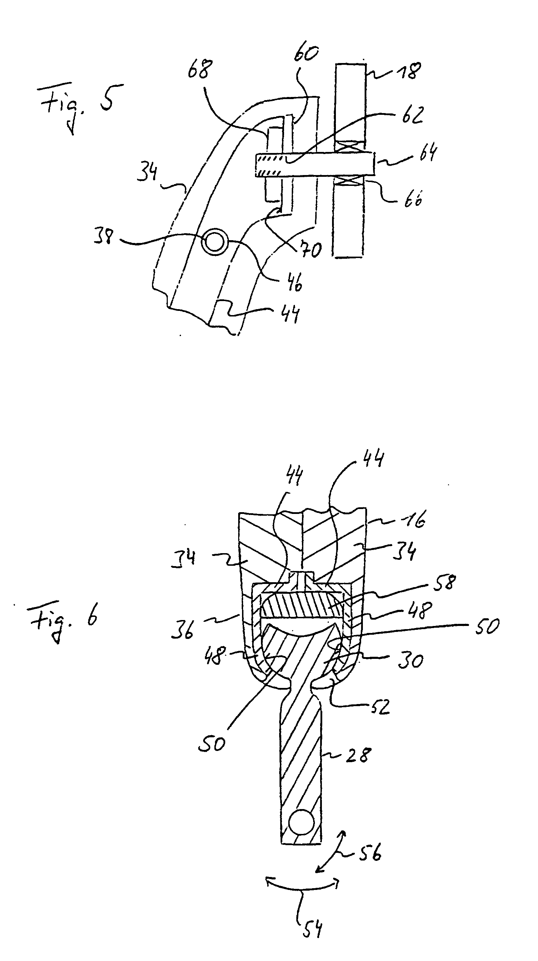

Die beiden Rollenlaufwerke 12 des Fördergutträgers 10 sind durch eine Tragstange 24 miteinander verbunden. Diese ist über eine jeweilige Gelenkanordnung 26 gelenkig am unteren Scheitelende jedes der Rollenlaufwerke 12 angebracht, so dass der Fördergutträger 10 sowohl Kurvenfahrten als auch Steigungs- bzw. Neigungsfahrten durchführen kann. Die Gelenkanordnungen 26 funktionieren prinzipiell so, wie dies in EP 0 516 969 A1 beschrieben ist. Hierzu weisen sie jeweils einen Verbindungsstift 28 auf, welcher mit einem vorzugsweise teilkugelförmigen Gelenkkopf 30 (s. Fig. 6) im Bereich des Scheitels des jeweiligen Bügels 16 gelenkig gelagert ist und andernends ebenfalls gelenkig mit der Tragstange 24 verbunden ist.

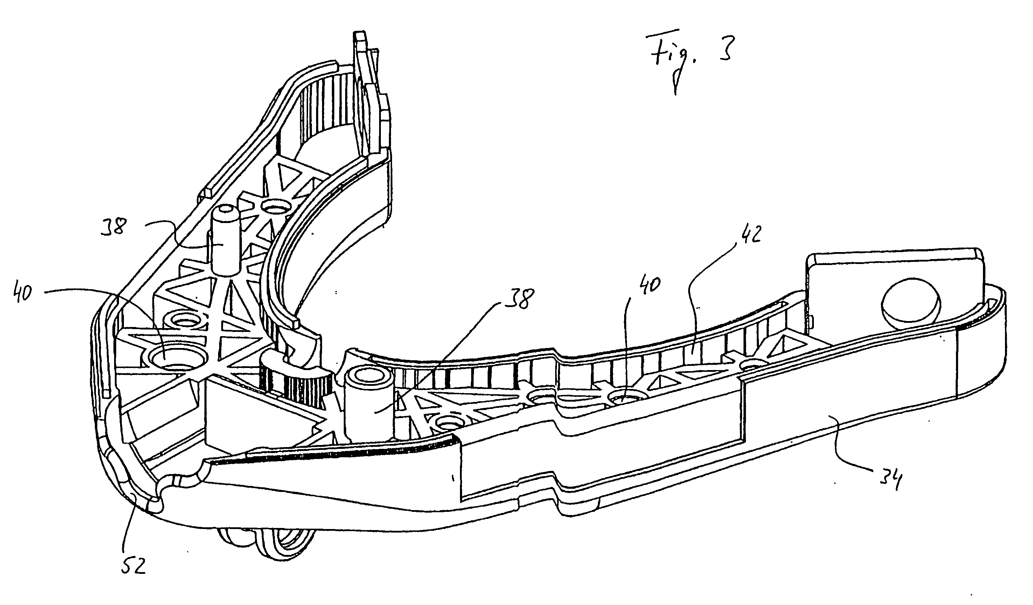

Die Tragstange 24 weist mehrere Kerben 32 auf, in die nicht näher dargestellte Kleiderbügel eingehängt werden können, an denen zu transportierende Kleidungsstücke aufgehängt sind. Weil durch das Gewicht der Kleidungsstücke im Förderbetrieb des Fördergutträgers 10 große Belastungen auf die Rollenlaufwerke 12 ausgeübt werden können, sind erfindungsgemäß bei dem in den Figuren 1 bis 6 dargestellten Ausführungsbeispiel die Bügel 16 mit einer Armierung zur Bügelverstärkung bestückt. Diesbezüglich wird nunmehr zusätzlich auf die Figuren 3 bis 6 verwiesen.

Jeder Bügel 16 ist aus zwei - der Bügelform entsprechend - annähernd V-förmigen Gehäusehälften 34 aufgebaut, welche zur Bildung eines Bügeloder Laufwerksgehäuses 36 aufeinander gelegt und vorzugsweise lösbar miteinander verbunden sind. Die Gehäusehälften 34, von denen eine in Fig. 3 dargestellt ist, können beispielsweise durch Spritzgießen hergestellt sein. Eine Anordnung von zueinander komplementär angeordneten Zapfen 38 und Löchern 40 dient zu deren positionsgerechten Zusammenfügung.

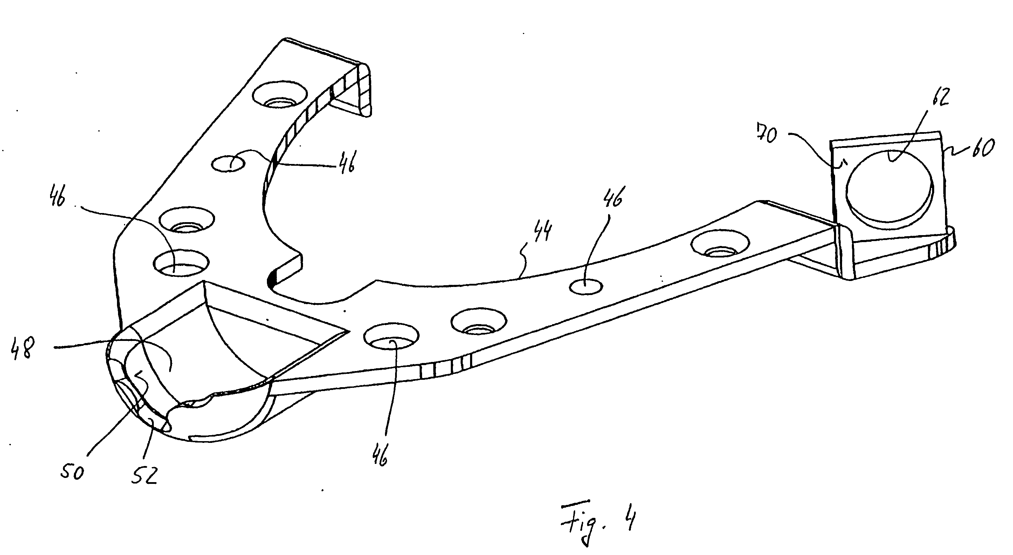

Jede der Gehäusehälften 34 weist eine in Fig. 3 allgemein mit 42 bezeichnete Ausnehmung auf, in die eine jeweilige Armierungsplatte 44 (siehe insbesondere Fig. 4) einlegbar ist. Die Armierungsplatten 44, die vorzugsweise aus Stahlblech gefertigt sind, besitzen - der Bügelkontur entsprechend - ebenfalls V-Form und sind mittels der Zapfen 38 relativ zu ihrer jeweiligen Gehäusehälfte 34 positionierbar. Hierzu weisen die Armierungsplatten 44 Positionierlöcher 46 auf, durch welche die Zapfen 38 der Gehäusehälften 34 hindurchtreten können.

Jede Armierungsplatte 44 weist im Bereich ihres V-Scheitels eine vorzugsweise durch Tiefziehen einstückig eingeformte Lagerhalbschale 48 auf. Die Lagerhalbschalen 48 der beiden Armierungsplatten 44 bilden Stützflächen 50 für den Gelenkkopf 30 und ergänzen sich im montierten Zustand des Bügels 16 zu einer Lagerpfanne, in welcher der Gelenkkopf 30 gelenkig aufgenommen ist. Eine kreuzschlitzförmige Aussparung 52, die am unteren Scheitelende in die Armierungsplatten 44 und die Gehäusehälften 34 eingearbeitet ist, verleiht dem durch diese Aussparung 52 hindurchtretenden Verbindungsstift 28 eine Bewegungsfreiheit in zwei zueinander orthogonalen Schwenkrichtungen 54, 56 (s. Fig. 6). In dem von den Lagerhalbschalen 48 der beiden Armierungsplatten 44 gebildeten Hohlraum ist außerdem ein Anschlagkörper 58 untergebracht. Dieser Anschlagkörper 58 und der Gelenkkopf 30 des Verbindungsstifts 28 wirken derart zusammen, dass stets nur eine Verschwenkbarkeit des Verbindungsstifts in einer der Schwenkrichtungen 54, 56 besteht, durch Drehung des Verbindungsstifts 28 um 90° um seine Stiftlängsachse jedoch eine Verschwenkbarkeit des Verbindungsstifts 28 längs der anderen der beiden Schwenkrichtungen 54, 56 hergestellt werden kann.

Jede Armierungsplatte 44 weist ferner an einem ihrer Schenkelenden einen einstückig angeformten Stützflansch 60 auf. Dieser Stützflansch 60 weist eine Durchtrittsöffnung 62 auf, durch welche eine Achswelle 64 für eine der Laufrollen 18 hindurchgeht. Die betreffende Laufrolle 18 ist auf der Achswelle 64 über ein Drehlager 66 drehbar gelagert. Auf der der Laufrolle 18 axial abgewandten Seite des Stützflansches 60 ist die Achswelle 64 mit einer Schraubmutter 68 verschraubt, welche sich auf der axial benachbarten Seite des Stützflansches 62 an einer Stützfläche 70 abstützt. Der Stützflansch 60 stützt die Laufrolle-Achswelle-Baugruppe 18, 64, 66, 68 somit gegen axiales Herausziehen aus dem Bügelgehäuse 36 ab. Da jede Armierungsplatte 44 nur an einem ihrer V-Schenkel einen solchen Stützflansch 60 trägt, dient jede der Armierungsplatten 44 zur axialen Abstützung einer der beiden Laufrolle-Achswelle-Baugruppen des Bügels 16.

Die Armierungsplatten 44 bilden eine durchgehend zusammenhängende Verbindung zwischen den Stützflächen 50 und 70. Wenn daher durch das Gewicht der an der Tragstange 24 hängenden Kleidungsstücke eine Zugbelastung auf den Verbindungsstift 28 ausgeübt wird, so werden - weil sich der Gelenkkopf 30 des Verbindungsstifts 28 an den Armierungsplatten 44 abstützt - die damit einhergehenden Kräfte über die Armierungsplatten 44 und deren jeweiligen Stützflansch 60 auf die beiden Laufrolle-Achswelle-Baugruppen und von dort auf die Schiene 14 übertragen. Eine Krafteinleitung in das Bügelgehäuse 36 findet dabei nicht statt. Daher besteht auch keine Gefahr, dass bei großen an der Tragstange 24 hängenden Lasten der Verbindungsstift 28 oder/und die Laufrolle-Achswelle-Baugruppen aus dem Bügel 16 herausgerissen werden.

Es versteht sich, dass in Abwandlung des dargestellten Ausführungsbeispiels auch nur eine einzige V-förmige Armierungsplatte vorhanden sein kann, die an beiden ihrer V-Schenkel je einen Stützflansch 60 trägt.

## Patentansprüche

1. Rollenlaufwerk für einen längs einer Laufschiene (14) hängend bewegbaren Fördergutträger (10) einer Hängefördereinrichtung, umfassend
- ein Laufwerksgehäuse (36),
- eine mit der Laufschiene (14) in Rolleingriff bringbare Laufrollenanordnung (18) mit mindestens einer an einer ersten Stützflächenanordnung (70) innerhalb des Laufwerksgehäuses (36) abgestützten Laufrolle-Achswelle-Einheit (18, 64, 66, 68) sowie
- eine der Gelenkverbindung des Rollenlaufwerks (12) mit einem Tragelement (24) für zu transportierendes Fördergut, insbesondere einer an zwei Rollenlaufwerken (12) gehaltenen Tragstange dienende Gelenkanordnung (26) mit einem an einer zweiten Stützflächenanordnung (50) innerhalb des Laufwerksgehäuses (36) gelenkig abgestützten Gelenkkörper (30),
**dadurch gekennzeichnet, dass** in dem Laufwerksgehäuse (36) eine vom Material des Laufwerksgehäuses (36) gesonderte Armierungsstruktur (44) untergebracht ist, welche mit der ersten und der zweiten Stützflächenanordnung (50, 70) ausgeführt ist und durchgehend zusammenhängend zwischen den beiden Stützflächenanordnungen (50, 70) verläuft.

2. Rollenlaufwerk nach Anspruch 1, **dadurch gekennzeichnet, dass** das Laufwerksgehäuse (36) aus einem Kunststoffmaterial hergestellt ist und die Armierungsstruktur (44) aus einem metallischen Werkstoff, insbesondere Stahl, besteht.

3. Rollenlaufwerk nach Anspruch 1 oder 2, **dadurch gekennzeichnet, dass** das Laufwerksgehäuse (36) mehrteilig ausgeführt ist und die Armierungsstruktur (44) in das Laufwerksgehäuse (36) eingelegt ist.

4. Rollenlaufwerk nach Anspruch 3, **dadurch gekennzeichnet, dass** die Armierungsstruktur (44) in dem Laufwerksgehäuse (36) durch Positioniermittel (38, 46) lagefixiert ist.

5. Rollenlaufwerk nach Anspruch 4, **dadurch gekennzeichnet, dass** die Positioniermittel eine Zapfen-Loch-Anordnung (38, 46) umfassen.

6. Rollenlaufwerk nach einem der Ansprüche 1-5, **dadurch gekennzeichnet, dass** die Armierungsstruktur (44) mindestens eine Armierungsplatte (44) umfasst, an welcher jeweils wenigstens ein Teil der beiden Stützflächenanordnungen (50, 70) ausgebildet ist.

7. Rollenlaufwerk nach Anspruch 6, **dadurch gekennzeichnet, dass** die Armierungsplatte (44) einstückig hergestellt ist.

8. Rollenlaufwerk nach Anspruch 7, **dadurch gekennzeichnet, dass** die Armierungsplatte (44) aus Blechmaterial hergestellt ist.

9. Rollenlaufwerk nach einem der Ansprüche 1-8, **dadurch gekennzeichnet, dass** das Laufwerksgehäuse (36) annähernd V-förmig ausgeführt ist, wobei die Gelenkanordnung (26) im Bereich der V-Spitze des Laufwerksgehäuses (36) angeordnet ist und im Bereich des freien Endes jedes V-Schenkels des Laufwerksgehäuses (36) eine Laufrolle-Achswelle-Einheit (18, 64, 66, 68) angeordnet ist.

10. Rollenlaufwerk nach Anspruch 9, **dadurch gekennzeichnet, dass** das Laufwerksgehäuse (36) zwei übereinanderliegend zusammengefügte, jeweils annähernd V-förmige Gehäusehälften (34) aufweist, dass die Armierungsstruktur (44) zwei in je eine der Gehäusehälften (34) eingelegte, ebenfalls annähernd V-förmige Armierungsplatten (44) umfasst und dass jede der Armierungsplatten (44) je einen Teil der zweiten Stützflächenanordnung (50) sowie die je einer der Laufrolle-Achswelle-Einheiten (18, 64, 66, 68) zugeordneten Stützflächen (70) der ersten Stützflächenanordnung (70) trägt.

## Claims

1. A roller gear for a load carrier (10) which is suspended on and can move along a slide rail (14),
- a running gear housing (36),
- a roller arrangement (18) which can be brought into rolling engagement with the slide rail (14) and having at least one roller/axle shaft unit (18, 64, 66, 68) supported on a first support surface arrangement (70) inside the running gear housing (36), and also a
- an articulated configuration (26) used for the articulated connection of the roller gear (12) with a support element (24) for material to be transported, in particular a carrying bar held on two roller gears (12), having an articulated body (30) supported in articulated fashion on a second support surface arrangement (50) inside the running gear housing (36),
**characterised in that** housed in the running gear housing (36) is a reinforcing structure (44) separate from the material of the running gear housing (36), which is produced with the first and the second support surface arrangements (50, 70) and runs continuously between the two support surface arrangements (50, 70).

2. A roller gear according to Claim 1,
**characterised in that** the running gear housing (36) is produced from a plastic material and the reinforcing structure (44) is made from a metallic material, in particular steel.

3. A roller gear according to Claim 1 or 2,
**characterised in that** the running gear housing (36) is designed in several parts and the reinforcing structure (44) is inserted into the running gear housing (36).

4. A roller gear according to Claim 3,
**characterised in that** the reinforcing structure (44) is positionally fixed in the running gear housing (36) by positioning means (38, 46).

5. A roller gear according to Claim 4,
**characterised in that** the positioning means comprise a peghole arrangement (38, 46).

6. A roller gear according to one of Claims 1-5,
**characterised in that** the reinforcing structure (44) comprises at least one reinforcing plate (44), on which in each case at least one part of the two support surface arrangements (50, 70) are constructed.

7. A roller gear according to Claim 6,
**characterised in that** the reinforcing plate (44) is manufactured in one piece.

8. A roller gear according to Claim 7,
**characterised in that** the reinforcing plate (44) is manufactured from sheet metal material.

9. A roller gear according to one of Claims 1-8,
**characterised in that** running gear housing (36) is designed with a approximate V shape, wherein the articulated configuration (26) is disposed in the region of the V point of the running gear housing (36) and a roller/axle shaft unit (18, 64, 66, 68) is disposed in the region of the free end of each V limb of the running gear housing (36).

10. A roller gear according to Claim 9,
**characterised in that** the running gear housing (36) comprises two housing halves (34) which are assembled one lying above the other and are each roughly V-shaped,
**in that** the reinforcing structure (44) comprises two reinforcing plates (44) which are inserted into one of the housing halves (34) and also roughly V-shaped
and **in that** each of the reinforcing plates (44) bears a part of the second support surface arrangement (50) and also the support surfaces (70) of the first support surface arrangement (70) associated with one of the roller/axle shaft units (18, 64, 66, 68).

## Revendications

1. Roulement à rouleaux pour un support de transport de produit (10) mobile suspendu le long d'une glissière (14) d'un dispositif de transport suspendu, comprenant :
un boîtier de roulement (36),
un dispositif à rouleaux (18) pouvant être mis en contact de roulement avec la glissière (14), avec au moins une unité arbre axial-rouleau (18, 64, 66, 68) en appui sur un premier dispositif à surface d'appui (70) à l'intérieur du boîtier de roulement (36), et
un dispositif d'articulation (26) servant de liaison articulée du roulement à rouleaux (12) avec un élément de support (24) pour le produit à transporter, plus particulièrement une tige support maintenue au niveau de deux roulements à rouleaux (12), avec un corps d'articulation (30) en appui articulé sur un deuxième dispositif à surface d'appui (50) à l'intérieur du boîtier de roulement (36),
**caractérisé en ce que**, dans le boîtier de roulement (36), se trouve une armature (44), séparée par le matériau du boîtier de roulement (36), qui est réalisée avec le premier et le deuxième dispositif à surface d'appui (50, 70) et s'étend de manière continue d'une seule pièce entre les deux dispositifs à surface d'appui (50, 70).

2. Roulement à rouleaux selon la revendication 1, **caractérisé en ce que** le boîtier de roulement (36) est en matière plastique et l'armature (44) est en métal, plus particulièrement en acier.

3. Roulement à rouleaux selon la revendication 1 ou 2, **caractérisé en ce que** le boîtier de roulement (36) est réalisé en plusieurs parties et l'armature (44) est insérée dans le boîtier de roulement (36).

4. Roulement à rouleaux selon la revendication 3, **caractérisé en ce que** l'armature (44) est fixée dans le boîtier de roulement (36) par des moyens de positionnement (38, 46).

5. Roulement à rouleaux selon la revendication 4, **caractérisé en ce que** les moyens de positionnement comprennent un dispositif axe-trou (38, 46).

6. Roulement à rouleaux selon l'une des revendications 1 à 5, **caractérisé en ce que** l'armature (44) comprend au moins une plaque d'armature (44) sur laquelle se trouvent au moins une partie des dispositifs à surface d'appui (50, 70).

7. Roulement à rouleaux selon la revendication 6, **caractérisé en ce que** la plaque d'armature (44) est réalisée d'une seule pièce.

8. Roulement à rouleaux selon la revendication 7, **caractérisé en ce que** la plaque d'armature (44) est constituée d'une tôle.

9. Roulement à rouleaux selon l'une des revendications 1 à 8, **caractérisé en ce que** le boîtier de roulement (36) présente approximativement la forme d'un V, moyennant quoi le dispositif d'articulation (26) est disposé au niveau de la pointe du V du boîtier de roulement (36) et, au niveau de l'extrémité libre de chaque branche du V du boîtier de roulement (36), se trouve une unité rouleau-arbre axial (18, 64, 66, 68).

10. Roulement à rouleaux selon la revendication 9, **caractérisé en ce que** le boîtier de roulement (36) comporte deux moitiés de boîtier (34) assemblées disposées l'une sur l'autre, approximativement en forme de V, **en ce que** l'armature (44) comprend deux plaques d'armature (44) également en forme de V et insérée dans chacune des moitiés de boîtier (34), et **en ce que** chacune des plaques d'armature (44) porte une partie de deuxième dispositif à surface d'appui (50) ainsi que les surfaces d'appui (70) du dispositif à surface d'appui (70) correspondant chacune à une des unités rouleau-arbre axial (18, 64, 66, 68).
